Europäisches Patentamt

European Patent Office

Office européen des brevets

(11) Publication number: **0 128 222**
**B1**

## (12) EUROPEAN PATENT SPECIFICATION

(45) Date of publication of patent specification: **01.08.90**

(51) Int. Cl.⁵: **G 11 B 5/52**

(21) Application number: **83903107.7**

(22) Date of filing: **30.09.83**

(86) International application number:
**PCT/JP83/00322**

(87) International publication number:
**WO 84/01465 12.04.84 Gazette 84/10**

(54) **ROTARY HEAD CYLINDER WITH FLUID BEARING.**

(30) Priority: **30.09.82 JP 172722/82**

(43) Date of publication of application:
**19.12.84 Bulletin 84/51**

(45) Publication of the grant of the patent:
**01.08.90 Bulletin 90/31**

(84) Designated Contracting States:
**DE FR GB**

(56) References cited:
**DE-A-3 235 866**
**GB-A-1 022 391**
**JP-A-5 620 830**
**JP-A-5 797 920**
**JP-U-56 123 035**
**JP-Y-4 319 220**
**US-A-4 346 946**

(73) Proprietor: **Matsushita Electric Industrial Co., Ltd.**
**1006, Oaza Kadoma**
**Kadoma-shi Osaka-fu, 571 (JP)**

(72) Inventor: **ASADA, Takafumi**
**22-6, Matsugaoka-cho Hirakata-shi**
**Osaka-fu 573 (JP)**
Inventor: **YOSHIDA, Cyuryo**
**3-84, Higashi Dori Nishinagasu-cho**
**Amagasaki-shi Hyogo-ken 660 (JP)**
Inventor: **SHIOYAMA, Tadao**
**3-606-26, Daifuku Nakatsumichi Sakurai-shi**
**Nara-ken 633 (JP)**
Inventor: **KUROSE, Kazuyoshi**
**3599-12, Ooaza Kanmaki Kanmaki-cho**
**Kitakatsuragi-gun Nara-ken 639-02 (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

### Technical Field

The present invention relates to a rotary head cylinder device used in video tape recorders, etc., using dynamic pressure type fluid bearing (hereinafter referred to as fluid bearing cylinder device) and provides a cylinder device which is thin and has high rotational precision, realized by utilizing cylindrical rotary transformers and by making the dimension different between the two herringbone shape grooves in the radial fluid bearing.

### Background Art

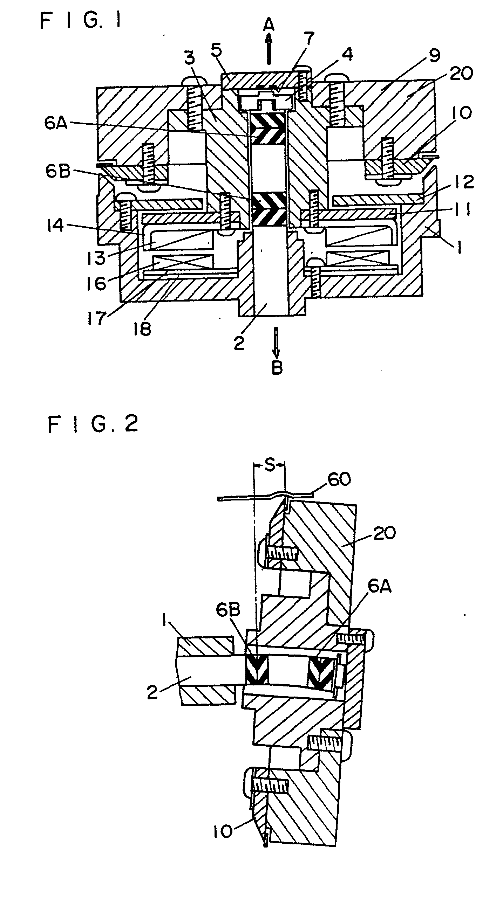

In the conventional fluid bearing cylinder device, with its particular structure as shown in FIG. 1, a fixed shaft 2 is pressed in and secured in place at the central portion of the lower cylinder 1, a sleeve 3 is rotatably put on the fixed shaft 2, on the top of the fixed shaft 2, a thrust bearing seat 4 is screwed and on the upper end of the sleeve 3, a thrust bearing 5 is screwed. On the fixed shaft 2, herringbone shape grooves 6A and 6B and on the lower surface of the thrust bearing 5, a spiral groove 7, respectively, are formed by etching, etc., and in all space inside the bearing chamber formed by the shaft 2 and the sleeve 3, lubricant 8, which is oil or grease, etc., is filled, thereby composing a dynamic pressure type fluid bearing. On the sleeve 3, there are mounted an upper cylinder 9 on which a rotary magnetic head 10 is held, a disc shape rotary transformer 11 on the rotary side for transmitting to the stationary side the electrical signal extracted from the magnetic tape, not shown in the drawings, through the magnetic head 10 and armature magnet case 14 of the motor, thereby composing rotary side unit 20. On the other hand, on the lower cylinder 1, a disc shape rotary transformer 12 on the stationary side which receives the aforementioned electric signal is fixed and inside the lower cylinder 1, there is secured a motor stator 19 consisting of an iron plate 18, printed substrate 17 and coil 16. As the motor is energized under this state, the rotary unit 20 begins turning, producing a pressure by the pumping action of the grooves 6A, 6B and 7; then, the unit is floated up by the rising rigidity of the oil film, thereby enabling the rotation without making contact with the stationary side unit. Under this condition, the force of the armature magnet 13 to attract the iron plate 18 and the dead weight of the rotary side unit is exerted in the direction of B as shown in FIG. 1, while a force opposing them is produced in the direction of A as shown in this figure by the pumping action of the spiral groove 7. There forces are balanced and, as a result, the rotary side unit is stably turned at a specified height.

With such a structure as above described, the rotary transformers 11 and 12 are in a disc shape, resulting in thick cylinder device as a whole. Moreover, as shown in FIG. 2, when this device is tilted sideways by 90 degrees, the stationary shaft 2 tends to warp, causing shift in the relative positions between the magnetic head 10 and the magnetic tape 60, thus interfering with normal playback, etc., in video tape recorder (hereinafter abbreviated to VTR), etc. For portable VTR, this device was inadequate in respect of dimensions and performance.

US patent 4346946 discloses a rotary head cylinder device similar to that described above but with a different bearing arrangement at the free end of the fixed shaft. In the cylinder device of US 4346946 the fixed shaft is provided with a flange at the free end thereof and bearings having different displacement load carrying capacity characteristics are provided on the upper and lower surfaces of the flange.

Said device provides a rotary head cylinder device with fluid bearing, comprising:
a lower cylinder;
a fixed shaft supported on the lower cylinder in cantilever way;
an upper cylinder secured to a sleeve put rotatably on the fixed shaft;
rotary transformers arranged coaxially with the aforementioned fixed shaft; wherein the fixed shaft has a first herringbone shape groove on its circumference near its free end and a second herringbone shape groove on its circumference on the stationary end side, with lubricant filled in the two above-mentioned grooves.

The present invention is characterised in that the first herringbone shape groove is relatively longer, the second herringbone shape groove is relatively shorter, and the rotary transformers are cylindrical.

Said US-A-4346946 further provides a rotary head cylinder device with fluid bearing, comprising:
a lower cylinder;
a fixed shaft supported on the lower cylinder in cantilever way;
an upper cylinder;
a sleeve put rotatably on the aforementioned fixed shaft;
a magnetic head; and
rotary transformers arranged coaxially with the aforementioned fixed shaft;
wherein the fixed shaft has a first herringbone shape groove on its circumference near its free end and a second herringbone shape groove on its circumference on the stationary end side, with lubricant filled in the two above-mentioned grooves.

As to this device the present invention is characterised in that the upper cylinder is secured to the aforementioned lower cylinder, the first herringbone shape groove is relatively longer, the second herringbone shape groove is relatively shorter, and the rotary transformers are cylindrical.

The free end side end surface of the fixed shaft is used as a bearing surface and two herringbone shape grooves are formed on the fixed shaft, with the dimension of the groove on the free end side made larger than on the fixed end side, and the rotary transformers are formed in cylindrical shapes, whereby a cylinder device of compact structure may be obtained for excellent portability. A similar rotary head cylinder device is claimed in the applicant's own other European patent application no. 83903106.9 published as EP-A-128221.

## Brief Description of the Drawings

FIG. 1 is a sectional view of a conventional fluid bearing cylinder;

FIG. 2 is a sectional view of its principal part in horizontal posture;

FIG. 3 is a sectional view of a first embodiment of this invention;

FIG. 4 is an enlarged sectional view of the bearing part of the same;

FIG. 5 is a graph of thrust direction fluid bearing supporting force;

FIG. 6 is a sectional view of the principal part of the fluid bearing cylinder device in its horizontal posture; and

FIG. 7 is a sectional view of a second embodiment of this invention.

## The Most Preferable Mode in Exercising the Invention

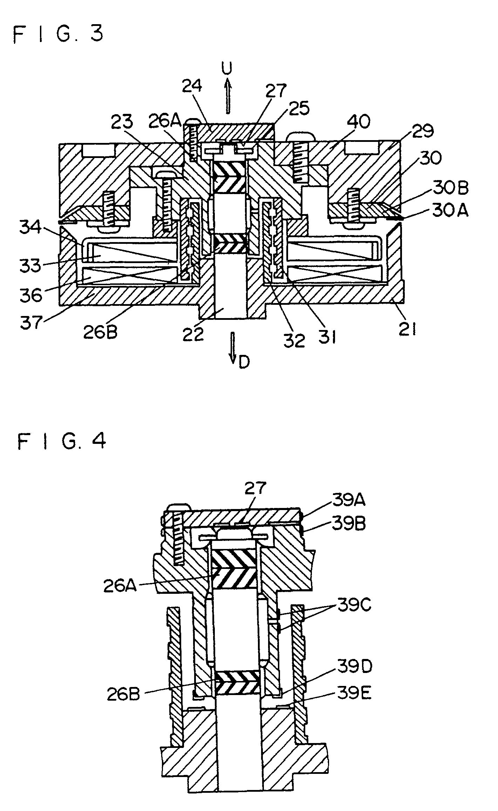

In the following, an embodiment of this invention is described with reference to FIGS. 3 ∽ 7. FIG. 3 is a sectional view of a fluid bearing cylinder device of the first embodiment of this invention. Referring to FIG. 3, 21 denotes a lower cylinder; 22, a fixed shaft pressed in or shrink fitted and secured at the central part of the lower cylinder 21; 23, sleeve; 24, thrust bearing fixed on the sleeve 23; 25, a ring for preventing the sleeve 23 from coming upward off the fixed shaft 22, which is secured in place on the fixed shaft 22. The reference codes 26A and 26B designate herringbone shape grooves 5 ∽ 20 microns (hereinafter abridged to μm) in depth formed by machining, etc., and 27 stands for a spiral shape groove put in position on the lower surface of the thrust bearing 24 to abut on the upper end surface of the fixed shaft 22, to compose a dynamic pressure type fluid bearing, filled with a lubricant 28A, 28B and 28C having a viscosity of the order of approx. 20 centipoises, and which is relatively excellent in the temperature-viscosity characteristic. Numeral 29 denotes an upper cylinder which is screwed to sleeve 23, and which is provided with a magnetic head 30. Numeral 31 designates a rotary side cylindrical rotary transformer, while 32 denotes a stationary side cylindrical rotary transformer, 31 and 32 being coupled to transmit the electrical signal extracted from the magnetic tape by the magnetic head 30 to the stationary side. Numeral 33 stands for an armature magnet of a plane-to-plane type direct drive motor, which, together with a magnet case 34, constitutes a motor rotor 35. The parts 23, 24, 29, 30, 31, 33 and 34 compose rotary side unit 40. On the other hand, a coil 36 is bonded on a printed plate 37 made of iron having a printed circuit on a silicate steel plate, thereby composing a motor stator 38. Reference codes 39A ∽ 39E denote a leakage proofing agent for prevention of seepage of lubricant 28 with passage of time.

In the following, the operation of the fluid bearing cylinder device composed as hereabove-stated is described:

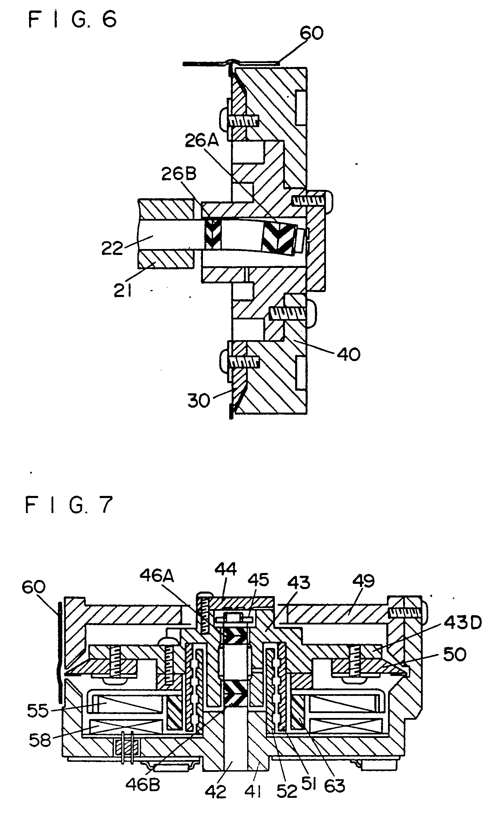

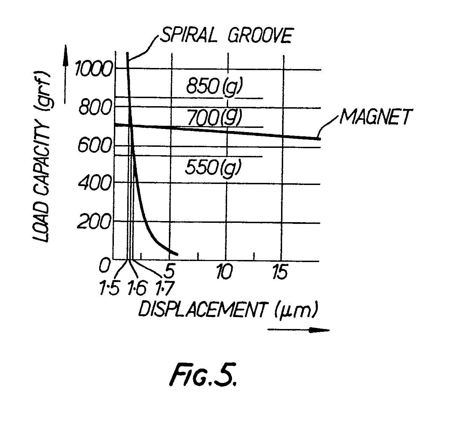

First, the operation of the bearing part is described. The upper surface of the fixed shaft 22 is finished flat and at a right angle to the shaft. On the lower surface of the thrust bearing 24, a small spiral groove with a diameter at least smaller than the diameter of the fixed shaft and being on the order of approx. 4 milimeter, as shown in FIG. 4, is formed by etching, etc., so that as the turning is started by energizing the motor, the rotary unit 40 is turned, while being floated up in the direction of the arrow U by the pumping action of the groove. On the other hand, as shown in this figure, the force of the permanent magnet of the armature magnet 33, etc., to attract the printed plate 37 made of iron, approx. 700 grams, plus the dead weight of the rotary side unit 40, approx. 150 grams, so a force totalling approx. 850 grams is exerted in the direction of the arrow D. Accordingly, when this fluid bearing cylinder device is placed in the vertical state, as shown in FIG. 3, the turning position is stabilized, being floated up by 1.5 μ, as shown in a pressure supporting force curve of FIG. 5. Then when this device is tilted sideways to 90 degrees, since the dead weight of the rotary side unit 40 is not imposed in the axial direction, the attractive force of approx. 700 grams of the permanent magnet such as armature magnet 33, etc., is exerted in the direction of the arrow D. However, the small diameter spiral groove has the characteristic of undergoing large change in load capacity with varying rates of floating up (or clearances), so that its floating-up rate, being on the order of 1.6 μm, is barely altered from the aforementioned. Next, as this device is held upside down, the dead weight of the rotary part, 150 grams, is imposed in the direction of nullifying the attractive force of the armature magnet 33 and, therefore, a force of approx. 550 gram, being the subtracted value, is exerted in the direction of the arrow D.

Nevertheless, the floating-up rate of the spiral groove remains in the order of 1.7 μm. Barely a change is observed in all cases. In this way, by balancing the first characteristic of undergoing large changes in load capacity with varying floating-up rates due to a small diameter spiral groove with the second characteristic of undergoing no change with varying air-gaps (variation of 1 ∽ 2 μm) like the attractive force of the permanent magnet which is exerted in the opposite direction thereto, the positional regulation in the axial direction can be exactly made in whatever posture. For this reason, this device is advantageous for portable type VTR adapted for photographing in various postures.

Shown in FIG. 6 is a sectional view of part of this device being held horizontally. As shown, the length in the axial direction of the herringbone shape groove on the tip side of the fixed shaft 22 is longer and the length of the groove on the stationary side is shorter. In this way, the tip is made stronger in bearing rigidity, while the stationary side is made weaker, so that the rotary side unit 40 is kept parallel to the lower cylinder 21. In contrast, shown in FIG. 2 is a conventional fluid bearing cylinder device being tilted to its horizontal posture. In this conventional device, the rotary side unit 20 could not be kept parallel to the lower cylinder 1 due to the warping of the fixed shaft 2, so the relative position between the magnetic tape 60 and the rotary magnetic head 10 was shifted and, consequently, normal playback of record was impossible. In the fluid bearing cylinder of this invention shown in FIG. 6, the relative position of the magnetic head to the magnetic tape 60 is not shifted in whatever posture, permitting revolution at high precision. As above-described, by the combination of a shaft 22 being a fixed shaft supported in cantilever way and grooves 26A and 26B on the fixed shaft 22 being set to appropriate dimensions, a high precision bearing is obtained, whereby a fluid bearing cylinder device excellent in the portability can be realized.

In the following, cylindrical rotary transformers 31 and 32 are described. According to this invention, the device as a whole is constructed thin by forming the rotary transformers in cylindrical shapes. For improved performance of the rotary transformers, the distance between the rotary side 31 and the stationary side 32 needs to be very narrow. With this structure, rotary transformers were often in contact with each other when they were combined with the conventional bearing and the device was tilted by 90 degrees to its horizontal posture, but by making one of the herringbone shape grooves 26A and 26B in the aforementioned radial bearing longer, and the other shorter, the inclining of the rotary unit 40 and so the contacting of the rotary transformers with each other can be averted.

By forming the rotary transformers in cylindrical shapes, the disadvantage of temporarily suspending it while assembling, as is the case in the conventional stationary side rotary transformer 12 is overcome and through combination of fixing the shaft 22 and forming the rotary transformers 31 and 32 in cylindrical shapes, a thin and quite easily assemblable fluid bearing cylinder device can be obtained.

In addition, as the magnetic head 30 is altered in shape from the conventional magnetic head 10, a head chip 30A is secured in place on the lower surface of the head base 30B of FIG. 3 and, further, the head base 30B is so mounted on the upper cylinder side as if buried therein from the borderline between the upper cylinder 29 and the lower cylinder 21, then, the cylinder device is made further thinner and it becomes feasible to build the motor rotor 35 and stator 38 into the interior of the lower cylinder.

In the following, the second embodiment of this invention is described with reference to FIG. 7. Numeral 41 designates lower cylinder; 42, fixed shaft; 43, sleeve; 44, thrust bearing; 45, cylinder; 51 and 52, cylindrical rotary transformers; and 55 and 58, plane-to-plane type motor, these parts being identical with those of the first embodiment shown in FIG. 3. What are different from the structure of FIG. 3 are that the upper cylinder 49 is secured to the lower cylinder 41 and the magnetic head 50 only is mounted on the flange part 43D of the sleeve 43. The operation of the aforementioned structure is nearly identical with that of the first embodiment, but by affixing the upper cylinder 49 to the lower cylinder 41, nearly 90% of the side pressure with which the magnetic tape 60 is pressed onto the cylinder is received by the upper and the lower cylinders 41 and 49 and only a small side pressure is imposed on the bearing. Consequently, low rigidity of the bearing is permissible. Thus it is possible to shorten the axial direction dimensions of the herringbone type grooves 46A and 46B, diminish the frictional moment of the bearing and, as a result, reduce the power consumption of the motor.

Besides, in the second embodiment, a permanent magnet 63 is mounted on the motor rotor 55. This provision is to make axial direction attraction more powerful, so that the change in the floating-up rate of the spiral groove when this cylinder device is turned upside down or side ways by 90 degrees to its horizontal posture is further cut back, thereby attaining high precision rotation. It should be noted that both in the first and the second embodiments, herringbone shape grooves may be formed on the ID of the sleeve to be abutted on the fixed shaft by machining, etc., instead of on the fixed shaft for the same effect.

By making larger the dimension of the groove on the free end side of the fixed shaft supported in cantilever way, and smaller on the other side, in a radial fluid bearing and by using a pair of cylindrical rotary transformers, a thin fluid bearing cylinder excellent in its portability is obtained and this effect is enormous.

**Claims**

1. A rotary head cylinder device with fluid bearing, comprising:

a lower cylinder (21);

a fixed shaft (22) supported on the lower cylinder (21) in cantilever way;

an upper cylinder (29) secured to a sleeve (23) put rotatably on the fixed shaft (22);

a magnetic head (30) fixed on the aforementioned upper cylinder (29); and

rotary transformers (31, 32) arranged coaxially with the aforementioned fixed shaft (22); wherein the fixed shaft (22) has a first herringbone shape groove (26A) on its circumference near its free end and a second herringbone shape groove (26B) on its circumference on the stationary end side, with lubricant filled in the two above-mentioned grooves;

characterised in that the first herringbone shape groove (26A) is relatively longer, the second herringbone shape groove (26B) is relatively shorter, and the rotary transformers (31, 32) are cylindrical.

2. A rotary head cylinder device according to claim 1, having a bearing surface on the end of the free end side of the fixed shaft (22) and further comprising a thrust bearing member (24) affixed on the sleeve (23) and abutting the aforesaid bearing surface, with a spiral groove (27) formed on either the bearing surface or the thrust bearing member (24), wherein the stator of a motor is arranged on the lower cylinder (21) while the rotor of the motor is carried on the sleeve (23) and a permanent magnet of an armature magnet (33) of the rotor attracts the printed plate (37) made of iron of the stator in the axial direction (D).

3. A rotary head cylinder device with fluid bearing, comprising:

a lower cylinder (41);

a fixed shaft (42) supported on the lower cylinder (41) in cantilever way;

an upper cylinder (49);

a sleeve (43) put rotatably on the aforementioned fixed shaft (42);

a magnetic head (50); and

rotary transformers (51, 52) arranged coaxially with the aforementioned fixed shaft;

wherein the fixed shaft (42) has a first herringbone shape groove (46A) on its circumference near its free end and a second herringbone shape groove (46B) on its circumference on the stationary end side, with lubricant filled in the two above-mentioned grooves;

characterised in that the upper cylinder (49) is secured to the aforementioned lower cylinder (41), the first herringbone shape groove (46A) is relatively longer, and the second herringbone shape groove (46B) is relatively shorter, and the rotary transformers (51, 52) are cylindrical.

4. A rotary head cylinder device according to claim 3, having a bearing surface on the end of the free end side of the fixed shaft (42), and further comprising a thrust bearing member (44) affixed on the sleeve (43) and abutting the aforesaid bearing surface, with a spiral groove being formed on either the bearing surface or the thrust bearing member (44), wherein the stator (58) of the motor is arranged on the lower cylinder (41) while the rotor (55) of the motor is carried on the sleeve (43) and a permanent magnet (63) mounted on the motor rotor (55) makes axial direction attraction more powerful, so that the change in the floating-up rate of the thrust bearing is cut back.

**Patentansprüche**

1. Zylinderanordnung mit rotierendem Kopf mit Fluidumlager, mit einem unteren Zylinder (21), einer feststehenden Achse (22), die an dem unteren Zylinder (21) auf eingespannte Weise gehalten ist, einem oberen Zylinder (29), der an einer Hülse (23) befestigt ist und drehbar auf der feststehenden Achse (22) sitzt, einem Magnetkopf (30), der an dem oberen Zylinder (29) befestigt ist, und rotierenden Übertragern (31, 32), die koaxial zu der feststehenden Achse (22) angeordnet sind, wobei die feststehende Achse (22) eine erste fischgratförmige Nut (26A) an ihrem Umfang nahe ihres freien Endes und eine zweite fischgratförmige Nut (26B) an dem Umfang an der stationären Endseite aufweist und die beiden Nuten mit einem Schmiermittel gefüllt sind,

dadurch gekennzeichnet, daß die erste fischgratförmige Nut (26A) relativ länger und die zweite fischgratförmige Nut (26B) relativ kürzer sind und daß die rotierenden Übertrager (31, 32) zylindrisch sind.

2. Zylinderanordnung nach Anspruch 1, mit einer Lagerfläche an dem Ende der freien Endseite der feststehenden Achse (22) und mit einem Drucklagerteil (24), das an der Hülse (23) befestigt ist und an der Lagerfläche anliegt, wobei Spiralnuten (27) entweder in der Lagerfläche oder dem Drucklagerteil (24) ausgebildet sind,

dadurch gekennzeichnet, daß der Stator eines Motors an dem unteren Zylinder (21) angeordnet ist, während der Rotor des Motors an der Hülse (23) gehalten ist und ein Permanentmagnet eines Ankermagneten (33) des Rotors die aus Eisen bestehende Leiterplatte (27) des Stators in axialer Richtung D anzieht.

3. Zylinderanordnung mit rotierendem Kopf mit Fluidumlager, mit einem unteren Zylinder (41), einer feststehenden Achse (42), die auf eingespannte Weise an dem unteren Zylinder (41) gehalten ist, einem oberen Zylinder (49), einer Hülse (43), die drehbar auf der feststehenden Achse (42) sitzt, einem Magnetkopf und rotierenden Übertragern (51, 52), die koaxial zu der feststehenden Achse angeordnet sind, wobei die feststehende Achse (42) eine erste fischgratförmige Nut (46A) an ihrem Umfang nahe ihres freien Endes und eine zweite fischgratförmige Nut (46B) an dem Umfang an der stationären Endseite aufweist und Schmiermittel in die beiden Nuten gefüllt ist,

dadurch gekennzeichnet, daß der obere Zylinder (49) an dem unteren Zylinder (41) befestigt ist, daß die erste fischgratförmige Nut (46A) relativ länger und die zweite fischgratförmige Nut (46B) relativ kürzer sind und daß die rotierenden Übertrager (51, 52) zylindrisch sind.

4. Zylinderanordnung nach Anspruch 3, mit einer Lagerfläche an dem Ende der freien Endseite der feststehenden Achse (42) und einem Drucklagerteil (44), das an der Hülse (43) befestigt ist und an der Lagerfläche anliegt, wobei eine Spiralnut entweder in der Lagerfläche oder dem Drucklagerteil (44) ausgebildet ist,

dadurch gekennzeichnet, daß der Stator (58) des Motors an dem unteren Zylinder (41) angeordnet ist, während der Rotor (55) des Motors an der Hülse (43) gehalten ist und ein an dem Motorrotor (55) befestigter Permanentmagnet (43) eine kräftige Anziehungskraft in axialer Richtung ausübt, so daß die Änderung in der Größe des Aufschwebens des Drucklagers verringert ist.

**Revendications**

1. Dispositif à cylindre à tête rotative ayant un palier à fluide, comprenant:

un cylindre inférieur (21),

un arbre fixe (22) supporté sur le cylindre inférieur (21) en porte-à-faux,

un cylindre supérieur (29) fixé au manchon (23) et monté afin qu'il puisse tourner sur l'arbre fixe (22),

une tête magnétique (30) fixée au cylindre supérieur précité (29), et

des transformateurs rotatifs (31, 32) disposés coaxialement à l'arbre fixe précité (22), l'arbre fixe (22) ayant une première gorge en chevron (26A) à sa circonférence près de son extrémité libre et une seconde gorge en chevron (26B) à sa circonférence du côté de l'extrémité fixe, un lubrifiant remplissant les deux gorges précitées,

caractérisé en ce que la première gorge en chevron (26A) est relativement longue et la seconde gorge en chevron (26B) relativement courte, et les transformateurs rotatifs (31, 32) sont cylindriques.

2. Dispositif à cylindre à tête rotative selon la revendication 1, ayant une surface de portée à l'extrémité du côté d'extrémité libre de l'arbre fixe (22) et comprenant en outre un organe formant palier de butée (24) fixé au manchon (23) et en butée contre la surface précitée de butée, une gorge spiralée (27) étant formée sur la surface de portée ou sur l'organe formant palier de butée (24), le stator du moteur étant monté sur le cylindre inférieur (21) alors que le rotor du moteur est porté par le manchon (23), un aimant permanent d'induit (33) du rotor attirant la plaque imprimée (37) formée de fer du stator dans la direction axiale (D).

3. Dispositif à cylindre à tête rotative à palier à fluide, comprenant:

un cylindre inférieur (41),

un arbre fixe (42) supporté sur le cylindre inférieur (41) en porte-à-faux,

un cylindre supérieur (49),

un manchon (43) monté afin qu'il puisse tourner sur l'arbre fixe précité (42),

une tête magnétique (50), et

des transformateurs rotatifs (51, 52) disposés coaxialement à l'arbre fixe précité,

l'arbre fixe (42) ayant une première gorge en chevron (46A) à sa circonférence, près de son extrémité libre, et une seconde gorge en chevron (46B) à sa circonférence du côté de l'extrémité fixe, un lubrifiant remplissant les deux gorges précitées,

caractérisé en ce que le cylindre supérieur (49) est fixé au cylindre inférieur précité (41), la première gorge en chevron (46A) est relativement longue et la seconde gorge en chevron (46B) relativement courte, et les transformateurs rotatifs (51, 52) sont cylindriques.

4. Dispositif à cylindre à tête rotative selon la revendication 3, ayant une surface de portée à l'extrémité du côté de l'extrémité libre de l'arbre fixe (42), et comprenant en outre un organe formant palier de butée (44) fixé au manchon (43) et en butée contre la surface précitée de portée, une gorge spiralée étant formée sur la surface de portée ou sur l'organe formant palier de butée (44), le stator (58) du moteur étant disposé sur le cylindre inférieur (41) alors que le rotor (55) du moteur est porté sur le manchon (43), un aimant permanent (63) monté sur le rotor (55) du moteur augmentant la puissance d'attraction en direction axiale si bien que la variation de distance de flottement du palier de butée est supprimée.

F I G. 1

A

3  5  7  4  9  20

6A

6B

10

14

12

11

13

1

16

17

18  2

B

F I G. 2

S

60

20

6A

1  6B

2

10

F I G. 3

F I G. 4

F I G. 6

F I G. 7

FIG.5.